# EUROPEAN PATENT SPECIFICATION

(11) **EP 0 687 569 B1**
(45) Date of publication and mention of the grant of the patent: **25.03.1998**
(21) Application number: 95201163.3
(22) Date of filing: 08.05.1995
(51) Int. Cl.: B41M 5/24, G03F 1/00, B32B 31/00, G11B 7/24

(54) **Process for producing a protected heat-mode recording material**
Verfahren zur Herstellung eines wärmeempfindlichen geschützten Aufzeichnungsmaterials
Procédé pour la fabrication d'un matériau d'enregistrement thermosensible protégé

(30) Priority: 15.06.1994 EP 94201713
(43) Date of publication of application: 20.12.1995
(73) Proprietor: AGFA-GEVAERT N.V., 2640 Mortsel (BE)
(72) Inventor: Van Damme, Marc, c/o Agfa-Gevaert N.V., B-2640 Mortsel (BE); Leenders, Luc, c/o Agfa-Gevaert N.V., B-2640 Mortsel (BE); Hoogmartens, Yvan c/o Agfa-Gevaert N.V., B-2640 Mortsel (BE); D'hont, Dirk c/o Agfa-Gevaert N.V., B-2640 Mortsel (BE)

(56) References cited:
- EP-A- 0 586 990
- US-A- 4 069 487
- US-A- 4 983 505
- US-A- 5 147 490
- US-A- 5 238 723

## Description

### 1. Field of the Invention

The present invention relates to a processs for the production of a heat-mode recording material having "direct read after write" (DRAW) capability and to a material suited for DRAW.

### 2. Background of the Invention

Almost all of the known DRAW recording materials are characterized by a heat-mode recording layer, i.e. a layer wherein the recording proceeds by absorption of light causing an intense heating which results in a human readable or machine readable mark.

In common heat-mode DRAW recording materials a thin recording layer of relatively low melting metals, their alloys or dyes is present on a support. Such layers are strictly not light-sensitive but are responsive to the thermal energy set free by the absorption of a high-intensity, short duration pulse of laser light. The writing spot ablates or melts a small amount of the thermo-sensitive layer which in the heated area by surface tension contracts and shows a small crater or hole.

DRAW recording materials can be used as a medium for recording an imagewise modulated laser beam to produce a human readable or machine readable record or optical mask serving as intermediate image, also called phototool, in contact-exposure of a photo-resist layer that may be applied in the production of printed circuits.

Human readable records are e.g. micro-images that can be read on enlargement and projection. An example thereof is computer output microfilm (COM) on a transparent support. Computer output microfilm images can be read by optical enlargement in a reader on projecting light through the COM record. The enlarged micro-film image can be copied on a suitable recording element such as diazo film or a silver halide emulsion material. Hard copies of the enlarged images can be obtained in a reader-printer by techniques known e.g. from the electrophotographic art.

An example of a machine readable DRAW recording material is the optical disk. To date for the production of optical disks tellurium and tellurium alloys have been used most widely to form highly reflective thin metal films wherein heating with laser beam locally reduces reflectivity by pit formation (ref. e.g. the periodical Physik in unserer Zeit, 15. Jahrg. 1984/Nr. 5, 129-130 under the heading "Optische Datenspeicher" by Jochen Fricke). Tellurium is toxic and has poor archival properties because of its sensitivity to oxygen and humidity. Therefore, the recording layers containing tellurium are airtightly protected to achieve an acceptable archival life.

To avoid the toxicity problem other relatively low melting metals such as Sn and Bi have been introduced in the production of a heat-mode recording layer. A survey of other metals also suited for use in DRAW heat-mode recording is given in US-P 4,499,178 and 4,388,400.

Metal layers have a relatively high reflectivity so that by their ablation in heat-mode recording spots of lower reflectivity are obtained.

According to another embodiment an increase in transmission is obtained in laser beam heated areas by using an initially poor reflective heat-mode recording layer on a transparent support which layer becomes ablated in the areas struck by laser beam. Such layer intended for COM-production and being made of co-deposited low melting point metals and sulphides such as GeS or SnS on a transparent support is described e.g. in Journal of Applied Photographic Engineering. Vol. 9, No. 1, Feb. 1983, p. 12. For the production of optical disks wherein the information is read in the reflection mode said poor reflective heat-mode recording layer is applied onto a relatively high melting reflective support or layer, e.g. aluminium or graphite layer, carried by a support.

In a further embodiment heat-mode recording is carried out with binderless organic dye layers as described e.g. in the periodical Philips Techn. T. 41, p. 338-346 by D. J. Gravesteijn and J. van der Veen.

Thin (normally less than 0.1 µm (micron) thick) layers of metals, alloys or dyes suited for heat-mode recording are produced advantageously by vacuum-deposition. These thin vacuum-deposited layers are mechanically weak and require the application of a protective coating. Electroplating is another method suited for depositing a thin metal layer, but needs a conductive support or interlayer, e.g. a transparent indium-tin oxide coating (NESA coating) applied on polyester support or glass.

The protective coating having a mechanical function in protecting the recording layer against direct abrasive contact with other materials has in optical disks also an optical function in that it keeps possible dirt out of focus in the optical playback of the information.

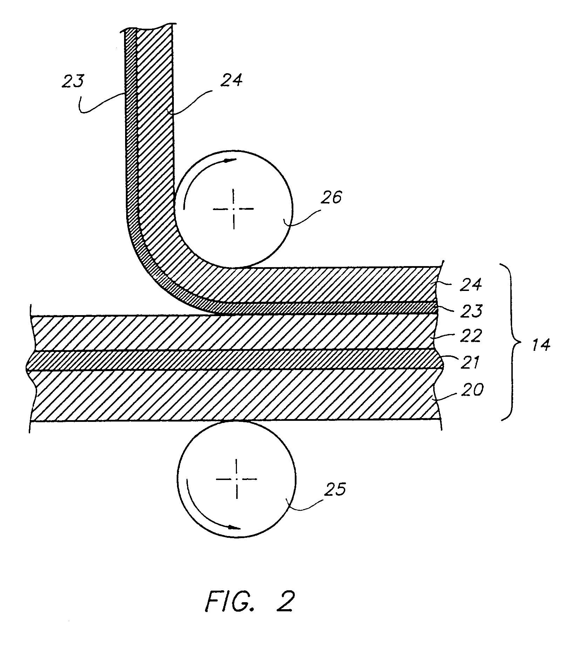

The protection of the mechanically vulnerable recording layer has been done by two approaches. In a first approach two recording layers on separate supports are assembled into a sandwich, with their supports facing out and having inbetween a space which can be filled with a chemically inert gas. In a second approach the recording surface is coated with a transparent material acting as protective overcoat (see IEEE Spectrum August 1978, pages 22 and 23 and particularly Fig. 2A and 2B).

According to US-P 4,499,178 and 4,388,400 for obtaining a heat-mode recording material having increased sensitivity, durability and mechanical strength it is effective to use organic resins in the production of a protective layer. Various resins can be used to form a protective layer, such as styrene resins, vinyl acetate resins, methacrylic acid ester resins, amide resins, cellulosic resins, halogenated polyolefins, phenolic resins, soluble polyesters, etc.

These resins are dissolved in a wide variety of solvents and spread by any known method onto the recording layer, whereupon the solvent is evaporated. The thickness of the protective layer varies with the film strength, and required recording density. Normally the thickness is in the range of 0.01 to 5 µm (micron).

The coating or spraying of a protective layer from a dissolved resin does not proceed inside the vacuum chamber used for the vacuum deposition of the heat-mode recording layer. After a web-type support has been vacuum-coated with the heat-mode recording layer it is wound on a take-up roller in the vacuum chamber, whereupon it is taken therefrom to the coating station in atmospheric conditions for unwinding and coating of the web with dissolved resin or resin mixture.

As explained in US-P 5,147,490 the winding and unwinding of a web having a freshly vacuum-coated heat-mode recording layer gives rise to the problem of producing optical defects such as pin-holes in the recording layer since sliding-friction unavoidable in said operation causes damages to the recording layer by abrasion and formation of dust even when the winding and unwinding operations are kept under control. Pin-holes and all kinds of micro-scratches are particularly undesirable in recording materials for producing micro-images.

According to the process for the production of a heat-mode recording material claimed in US-P 5,147,490 said problem has been solved by laminating a protective organic resin layer in web form onto the supported "direct read after write" (DRAW) recording layer by means of an adhesive layer while said supported recording layer remains within the sealed zone and under the same vacuum conditions wherein the recording layer has been applied.

In practice the combined total thickness of said protective organic resin layer and adhesive layer is for wrinkleless application not less than 20 µm which thickness in using the final DRAW print as a mask, i.e. phototool, in the contact-exposure of a photosensitive member, e.g. photoresist layer, gives rise to a certain loss in image resolution which will be due not only to the exposure distance created by said thickness but also by reflection and diffraction of light in the laminated layers.

It is one of the objects of the present invention to provide a process for the production of a heat-mode recording material having "direct read after write" (DRAW) possibilities wherein a non-imaged heat-mode recording layer of said material is protected with a protective layer or layer assemblage being sufficiently thin for making the thereupon heat-mode imaged recording material particularly suited for use as phototool in the contact-exposure of photosensitive materials thereby yielding improved print resolution.

It is a particular object of the present invention to provide a direct read after write (DRAW) recording material having a heat-mode recording layer coated with a highly scratch-resistant thin single outermost protective layer.

Other objects and advantages of the present invention will appear from the further description and drawings.

According to the present invention a process for the production of a heat-mode recording material having "direct read after write" (DRAW) capability and containing a heat-mode recording layer on a permanent support is provided, wherein said process comprises in consecutive order the steps of (1) forming a laminated web by laminating with heat and pressure to said recording layer a single adhesive layer or multiple layer assemblage carried by a web-type temporary support which layer or layer assemblage has a thickness not larger than 20 µm, and (2) separating said temporary support from said adhesive layer leaving said single adhesive layer through hardening as a protective element on said recording layer, or (2') separating said temporary support from said adhesive layer assemblage leaving said layer assemblage as a protective element on said recording layer, and (3) chemically hardening at least the outermost layer of the transferred layer assemblage after said separating step (2) or (2') by means of heat and/or ultraviolet radiation or electron beam radiation, and said outermost protective layer has at 20 °C a scratch resistance value not lower than 6 g determined by ANSI test PH1.37-1977 Method A using in the scratch test a single spherical point sapphire stylus having a point diameter of 13 µm (micron).

ANSI is the acronym for American National Standards Institute, Inc. and is a registered tradename). The ANSI test PH1.37-1977 Method A is a test in the group of - Methods for Determining the Scratch Resistance of Processed Photographic Film. The standard test is intended for evaluating the scratch resistance of dry, processed photographic film on either the emulsion or the base side.

Method A operates with a scratch test apparatus described in said ANSI standard PH1.37-1977 in which a strip of the material to be tested held in a specimen holder is smoothly, linearly and horizontally travelled underneath a single spherical point sapphire stylus having in the applied test conditions a point diameter of 13 micron. The sapphire stylus is mounted at the end of a pivotable arm so that it can be lowered onto the specimen and thereby scribe a line on it when the specimen holder travels along under the stylus. The stylus should make perpendicular contact with the specimen.

The stylus arm is counterbalanced so that it produces no load on the stylus. The weights forming the load for scratching are applied with their center of gravity directly over the stylus. These weights range from 1 to 100 grams. Following the applied test procedure parallel lines are formed with different load going upward pro line by 1g.

The formation of a scratch at a certain load is assessed visually. The rating of the scratch resistance is taken as the load in grams that produces the first visible scratch.

### 3. Brief Description of the Drawings

Figure 1 represents a cross-sectional view of a vacuum-deposition apparatus including a lamination unit for carrying out step (1) of the process according to the present invention.

Figure 2 represents schematically a peel-apart procedure for carrying out step (2) of the process according to the present invention.

### 4. Detailed Description of the Invention

According to a preferred embodiment of the present invention the production of a heat-mode recording material having DRAW capability includes the step of coating a heat-mode recording layer by "vacuum evaporation" which aptly applies to a process involving the vaporization of bulk material, e.g. molten metal, and redeposition thereof as a thin layer on a web-type support under substantially reduced pressure.

According to another embodiment vacuum-coating of a heat-mode recording layer of a DRAW recording material proceeds by "sputtering". Sputtering involves the production of energetic particles by ionization of a gas (usually argon at reduced pressure) and the bombardement with said particles of the target material in an electric field whereby the ejection of target atoms towards the web-type support takes place.

The adhesive layer or multiple layer assemblage forming a protective element according to the present invention is preferably transparent in such a degree that it allows visual inspection therethrough of the image information contained in the heat mode-recording layer and is for application as a printing mask or phototool sufficiently transparent with respect to ultraviolet light to allow ultraviolet radiation to be used in contact-exposure towards an underlaying UV-sensitive recording material such as a polymeric photoresist material.

The thickness of the applied single adhesive layer or total thickness of said multiple layer assemblage is preferably in the range of 0.1 to 15 µm, more preferably in the range of 1 to 10 µm.

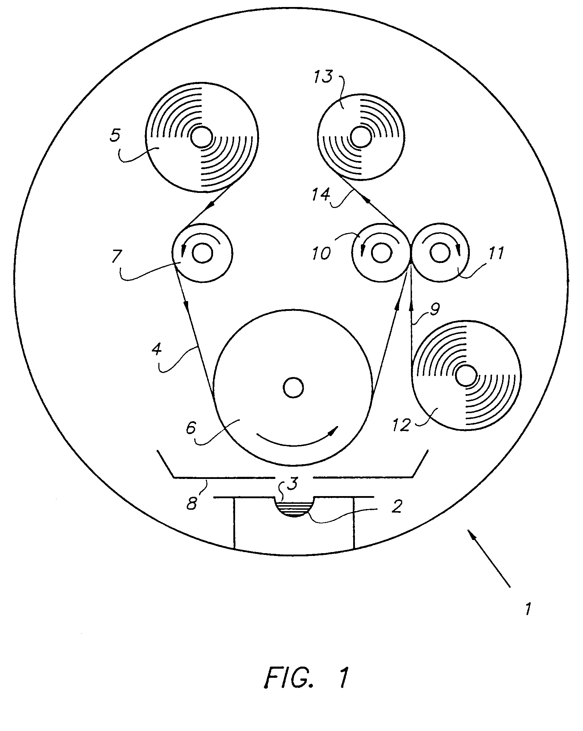

The invention is illustrated by means of Fig. 1 and 2.

Referring to Fig. 1 a cylindrical vacuum chamber 1 contains an electrically heated refractory tray or boat 2 in which a relatively low melting metal, e.g. bismuth, 3 is present as metal vapour source. Under high vacuum (e.g. at a pressure in the range of 10-2 Pa to 8x10⁻¹ Pa) the obtained metal vapour is directed towards a web 4 made of polyethylene terephthalate and is deposited thereon at a thickness in the range of 5 nm to 300 nm. The optical density of the bismuth layer can be in the range of 1.5 to 4 according to the intended use of the lateron heat-mode formed bismuth image. The web 4 is supplied by an unwinding roll 5 and is conveyed over a guiding roller 7 against a cooled support roller 6. A baffle 8 restricts the vapour deposition on the web 4 to a small sector of the cooling roller 6. In that way unwanted deposition of metal e.g. on the wall of the vacuum chamber is prevented. After passing the zone of the metal vapour deposition the web 4 travels upwardly to meet a laminating web 9 (composite material of adhesive layer, release layer and temporary support) supplied by supply roller 12 in the nip formed between a pressure roller 10 that exerts pressure towards a backing roller 11 that is internally heated. A take-up roller 13 serves as storage roller for the laminated web material 14 having in this stage the temporary support as outermost layer.

Out of the vacuum chamber 1 the temporary support together with its release layer is removed (peeled apart) and the bared adhesive layer now being the outermost layer is cured optionally by further applied heat, (i.e. thermally chemically cured) or by electron beam or ultraviolet radiation. Thereupon the heat-mode recording web is cut into micro-film formats, e.g. micro-fiche format, optical floppy disks or sheets for contact-exposure purposes, e.g. for the production of a phototool.

As illustrated in US-P 5,147,490 the peel apart step in which the temporary support is removed can be carried out under the vaccum conditions present during the coating of the heat-mode recording layer.

Fig. 2 represents schematically a peel-apart procedure whereby an outermost single protective adhesive layer is left on a vacuum-coated metal recording layer of a head-mode DRAW recording material taken from the supply roller 13 of Figure 1. For clarity's sake some dimensions and proportions of the recording material layers have been exaggerated. Fig. 2 shows a laminated web 14 consisting of a permanent resin support 20 vacuum-coated with a heat-mode recording layer 21, e.g. bismuth layer, an adhesive layer 22, release layer 23 and temporary support 24. Said web 14 is led in the nip of pressure rollers 25 and 26 and the temporary support 20 together with its release layer 23 is peeled apart leaving the adhesive layer 22 as outermost layer on the permanently supported metal layer 21 of the heat-mode recording material.

For information written by heat-mode recording and to be read in the transmission mode and for contact-exposure or projection purposes, e.g. for COM reproduction in the form of enlarged copies in a reader-printer, the recording layer is vacuum-deposited onto a transparent resin support. Representative resin supports are made of hard polymers. e.g. polyesters such as polyethylene terephthalate, polycarbonates, cellulose triacetate, poly(meth)acrylic esters, polyvinyl chloride and copolymers. These supports have e.g. a thickness in the range of 50 to 200 µm and are optionally provided with one or more subbing layers improving the adherence of the recording layer, as described e.g. in published European patent application 0 464 906 and/or are provided in contact with the heat-mode recording layer with a thermally deformable layer having a low softening point, e.g. a polyolefin layer such as polyethylene layer having preferably a thickness smaller than 10 µm. The presence of a soft deformable layer or elastomer layer in direct contact with the heat-mode recording layer is in favour of a more easy globule formation when an ablative metal or metal alloy, e.g. bismuth, forming the heat-mode recording layer is heated by laser beam. The globule-formation in heat-mode recording layers containing low melting-point metals and such layer having a low softening point has been described in Journal of Applied Photographic Engineering, Volume 9, Number 1, February 1983, p.12.

The present invention includes an embodiment wherein the adhesive layer makes part of a multiple layer assemblage, e.g. bilayer-assemblage in which the layer contacting the heat-mode recording layer is made of a soft non-hardenable (non-curable) hot melt adhesive polymer having preferably a glass transition temperature lower than 30 °C and at least the layer forming lateron the outermost layer on the recording material is hardenable by heat (thermohardenable) and/or hardenable (curable) by ultraviolet radiation or electron beam radiation.

Polymers having a glass transition temperature (Tg) below 30 °C are known to those skilled in the art and some of them are described in Journal of Chemical Education, Vol. 61, Number 8, August 1984, p. 668 in the article "An Overview of the Glass Transition Temperature of Synthetic Polymers". Examples of such polymers are selected from the group consisting of a polyolefin, e.g. polyethylene or poly(1-butene), an ethylene-vinylacetate copolymer, an ethylene-acrylic acid(ester) copolymer, a styrene-butadiene copolymer, a polyamide or polyester having aliphatic carbon chains, e.g. poly(ethylene adipate).

The temporary support of the heat-mode recording material according to the present invention may be made of the same material as the permanent support but is preferably coated with a release layer allowing the easy peel-off of the adhesive layer.

The release layer may be made of e.g. of substances selected from the group consisting of solid waxes, polyvinyl alcohol, silicone resins and higly fluorinated resins, examples of which are described in US-P 4,059,768 or may contain said substances serving as release agent preferably in excess of 30 % by weight in a film forming polymer adhering to the temporary support. In a particular embodiment the release agent applied in a polymeric binding agent is a silicone oil that may be hardened to some extent as described e.g. in European patent specification 0 133 012. Some silicone oil of said release layer may remain as friction-lowering substance on the adhesive layer after its peel apart from the temporary support.

The thickness of the release layer is preferably in the range of 0.3 to 5 µm. The release layer may contain a curable composition and curing thereof proceeds preferably before coating thereon the adhesive layer. For example, a polyvinyl alcohol release layer applied on a temporary polyethylene terephthalate support is prehardened by crosslinking with tetramethoxysilane (TEMOS).

The adhesive layer for use according to the present invention must adhere very well to the heat-mode recording layer, e.g. a bismuth layer. The adhesive layer must be sufficiently transparent in the sense as already defined and may not stick (after hardening e.g. by cooling) to the rear side of the permanent support when winding the finished recording material.

Suitable single adhesive layers are made of e.g. a poly(meth)acrylate ester, e.g. butyl methacrylate and copolymers thereof with styrene, cellulose nitrate, and polymer compositions that are chemically hardenable by heat, i.e. are thermosetting, or are hardenable by ultraviolet radiation or electron beam radiation as described e.g. in published EP-A 0 522 609.

The hardening of the outermost single adhesive layer, e.g. by cooling or polymer-curing, proceeds after the lamination step and before the peel apart step in order to avoid sticking of that layer to the rear side of the recording material on winding. When applying a multiple layer asemblage having no outermost sticky layer the chemical hardening of the adhesive layer contacting the heat-mode recording layer may proceed before as well as after the peel apart step.

In order to improve the scratch resistance of a layer forming an outermost protective element anti-friction agents are incorporated into the outermost layer composition in the form of waxes, fluorine-or phosphate-containing surfactants and slipping agents such as siloxanes (silicones in liquid or solid form), higher fatty acids or salts thereof, e.g. zinc stearate, or silica or silicates having an average particle size in the range of 1 to 10 µm. Preferred in that respect without impairing too much the transparency of the adhesive layer are silica particles and colourless silicate particles, e.g. mica, calcium silicate, aluminium silicate, talc (magnesium silicate) partially protruding from the outermost protective layer.

After removing the temporary support and leaving the single adhesive layer or adhesive multiple layer assemblage on the heat-mode recording layer the obtained outermost surface of the recording material may be post-coated with a supplementary covering layer improving scratch resistance. Such coating having preferably a thickness not larger than 10 µm may be applied by spraying. Said coating may consist of or comprise a slipping agent as described above, e.g. a silicone oil or a fatty acid.

The coating composition of the adhesive layer or adhesive layer of the multiple layer assemblage may be applied by any thin-layer coating technique known in the art, e.g. by reverse roll coating or meniscus coating or slide hopper coating for the multiple layer assemblage using a proper vapourizable organic solvent for the applied polymer(s). The polymer(s) may be applied from aqueous medium in latex form, i.e. dispersed form, and coalesce on drying. For coating the multiple layer assemblage the coating may proceed in multiple coating steps, in which the polymer layer having a low softening point may be applied by extrusion. Optionally the coating or coatings is (are) followed by stretching the coated structure in order to reduce the total layer thickness.

According to a particular embodiment photo-curable (UV-curable) or electron beam curable polymers are coated from aqueous medium as a solution or dispersion.

Photo-curable and electron beam curable polymer compositions are advantageously applied in the form of a solution of polymers in monomers polymerizing in situ after coating.

According to an embodiment the adhesive layer is made from a radiation-curable composition containing as primary components :
(1) at least one reactive (pre)polymer or oligomer,
(2) optionally at least one reactive solvent monomer dissolving (1),
(3) in the case of an UV curable formulation a photoinitiator.

In said composition (1) the reactive (pre)polymer or oligomer is a compound containing one or more ethylenically unsaturated groups. Reactive polymers containing ethylenically unsaturated groups are commercially available from BOMAR Specialities Company under the tradename of JAYLINK (modified cellulose polymers containing acrylamidomethyl groups).

These reactive (pre)polymers or oligomers (1) are present in said composition preferably in a 10 to 100 % by weight ratio and said reactive solvent in a 0 to 10 % weight ratio.

When present the photoinitiator having UV-absorptivity is used in a concentration as low as possible, e.g. in a concentration of 0.1 to 1 % by weight ratio with respect to the total coating composition. Preferably photo-bleachable photoinitiators are used.

Examples of suitable prepolymers for use in a radiation-curable composition of the adhesive layer applied according to the present invention are the following : unsaturated polyesters, e.g. polyester acrylates; urethane modified unsaturated polyesters, e.g. urethane-polyester acrylates. Liquid polyesters having an acrylic group as a terminal group, e.g. saturated copolyesters which have been provided with acryltype end groups are described in published EP-A 0 207 257 and Radiat. Phys. Chem., Vol. 33, No. 5, 443-450 (1989).

Copolyesters substantially free from low molecular weight, unsaturated monomers and other volatile substances are of very low toxicity (ref. the periodical Adhäsion 1990 Heft 12, page 12). The preparation of a large variety of radiation-curable acrylic polyesters is given in German Offenlegungsschrift No. 2838691. Mixtures of two or more of said prepolymers may be used.

Further polymers suited fror use in radiation (UV or EB) curable compositions are selected from the group consisting of unsaturated urethane(meth)acrylates, epoxy(meth)acrylates, polyether(meth)acrylates and polyester(meth)acrylates as described e.g. in "Chemistry & Technology of UV and EB formulation for coatings, inks and paints" Vol.2 : Prepolymers and Reactive diluents for UV and EB curable formulations." Ed. P.K.T. OLDRING - SITA Technology - London (1991).
A survey of UV-curable coating compositions is given e.g. in the periodical "Coating" 9/88, p. 348-353.

Other UV-curable adhesive layers can be obtained by the use of prepolymers also called oligomers of the class of aliphatic and aromatic polyester-urethane acrylates. The structure of polyester-urethane acrylates is given in the booklet "Radiation Cured Coatings" by John R. Constanza, A.P. Silveri and Joseph A. Vona, published by Federation of Societies for Coatings Technology, 1315 Walnut St. Philadelphia, PA 19107 USA (June 1986) p. 9.

The chemical structure of particularly useful aromatic polyester-urethane acrylate prepolymers is illustrated by following general formula : 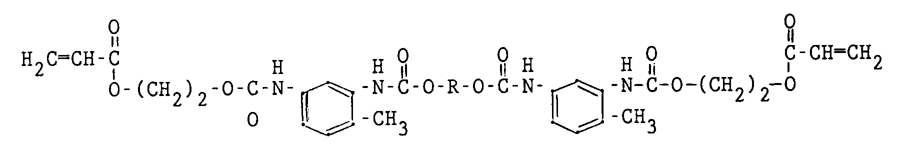 wherein R is a C2 to C6 alkylene group.

In the synthesis of said aromatic urethane first tolylene 2,4-diisocyanate is used in a polyaddition reaction with aliphatic diols and the polymerizable double bond end structures are introduced by reaction of terminal isocyanate groups with 2-hydroxyethyl acrylate. In the synthesis of aliphatic urethane acrylates an alkylene diisocyanate is used, e.g. 1,6-diisocyanatohexane.

Examples of the preparation of aliphatic polyester-urethane acrylates, are given in US-P 4,983,505 and in DE 2530896.

The introduction of a plurality of acrylic double bonds per polymer chain of the prepolymer proceeds by first effecting a partial esterification of a polyol, e.g. pentaerythritol, with acrylic acid and a subsequent reaction of the still free HO-group(s) of the polyol with a polyfunctional isocyanate.

Suited for use according to the present invention in pressure-sensitive curable adhesive layer compositions are ultraviolet cured pressure sensitive adhesives of the class of I. Acrylate Grafted Polyvinyl Alkyl Ethers and II. Monoacrylate Grafted Polyethers are described in Journal of Radiation Curing, Vol. 9/No. 2 April 1982.

The UV or EB curable coating composition may contain inert polymers by which is meant polymers that do not crosslink but improve by their inherent hardness the scratch resistance of the protective layer and counteract sticking to the rearside of the recording material when winding up. For that purpose are mentioned e.g. polyesters derived from aromatic acids, e.g. iso-, or terephhtalic acid, poly(meth)acrylate esters of C1-C4 alcohols, e.g. n-butyl methacrylate, and copolymers thereof with styrene and polyvinyl acetate.

Thus, according to a particular embodiment the adhesive layer is coated on its temporary support, preferably provided with release layer, from a coating composition essentially consisting of (an) addition polymerizable monomer or mixture of such monomers having dissolved therein at least one of the polymers (i) and/or (ii), wherein :
i) is a linear copolyester of isophthalic acid and at least one other dibasic carboxylic acid with an aliphatic diol, said copolyester being soluble in methyl methacrylate for at least 10 g per 100 ml at 20 °C, and/or
(ii) is a linear polyester of terephthalic acid and/or isophthalic acid with an oxyalkylated bisphenol, said polyester being soluble in methyl methacrylate for at least 10 g per 100 ml at 20 °C, and
wherein said composition comprises said monomer(s) acting as solvent(s) for polymers (i) and/or (ii) in a 20 to 70 % by weight ratio with respect to the totality of said polymer(s) and monomer(s).

According to a preferred embodiment the above resins (i) and (ii) have a softening point (ring & ball) not lower than 90 °C. The ring & ball method for determining the softening point is described in : Annual Book of ASTM Standards (1985), Vol. 06.03, p. 1031-1037.

The polymers (i) and (ii) have preferably a tensile strength of at least 30 N/mm². determined by (for the applied testing machine reference is made to G. A. Patfoort "Polymers" An Introduction to their Physical Mechanical and Rheological Behaviour - (1974) - E. Story-Scientia P.V.B.A. Scientific Publishers Gent/Belgium. p. 134-136.

The weight-average molecular weight (Mw) determined by gel-permeation chromatography (GPC) of said polymers (i) and (ii) is preferably comprised between 10,000 and 30,000.

Preferred copolyesters (i) have an isophthalate content of at least 30 % by weight.

Preferred dibasic acids that are combined with isophthalic acid in the formation of copolyesters (i) are C4-C10 dibasic acids, e.g. terephthalic acid and sebacic acid.

Examples of diols that may be used in the preparation of said copolyester (i) are : ethylene glycol, 1,4-butanediol, neopentyl glycol and 1,6-hexanediol, which diols may be used in combination.

Copolyesters (i) can be easily prepared by well-known polycondensation processes and representatives of them are commercially available under the tradename VITEL, e.g. VITEL PE 200 of the firm The Goodyear Tire & Rubber Co , Ohio, U.S.A, and are likewise commercially available in the group of Dynamit Nobel Chemicals under the tradename DYNAPOL of Hüls Aktiengesellschaft, Postfach 1320 - D-4370 Marj, Germany. An example of the preparation of such copolyesters is described in US-P 4,078,108.

The alkoxylated bisphenol used in the preparation of said polyesters and copolyesters (ii) is preferably within the scope of the following general formula : 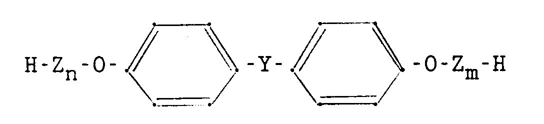 wherein :
Y represents an alkylidene group having from 1 to 4 C-atoms,
Z represents an oxyalkylene group wherein the alkylene group has 2 to 4 C-atoms, and m and n are integers 1 to 2. Preferred are ethoxylated and/or propoxylated bisphenol A compounds wherein bisphenol A stands for bis(4-hydroxyphenyl)-2,2'-propane.

Suitable propoxylated bisphenol A polyesters are on the market under the trade name ATLAC KTR 2300 and KTR 2959 of Atlas Chemical Industies N.V. (Everslaan 45, Everberg - Belgium).

The preparation of polyesters using an alkoxylated bisphenol is described e.g. in GB-P 1,373,220.

Adhesive layers having particularly good adherence to a vacuum-coated bismuth layer are obtained by means of coating compositions wherein the above polymers (i) and/or (ii) are dissolved in the range of 30 to 70 % by weight at 20 °C in the addition polymerizable liquid monomer(s) acting as solvent(s).

The use of said polymerizable liquid monomers polymerizing in situ in the coating makes it possible to dispense with organic solvents that have to be removed from the coated adhesive primer layer composition.

The addition polymerizable monomers may be monofunctional or plurifunctional by which is meant that they may contain one or more olefinically unsaturated groups. Examples of monofunctional addition polymerizable liquid monomers that may serve as solvent for the above defined polymers (i) and (ii) are the following : methyl (metha)acrylate, ethyl acrylate, butyl acrylate, 2-ethylhexyl methacrylate, 2-hydroxyethyl acrylate, 2-hydroxyethyl methacrylate, glycidyl methacrylate, n-hexyl acrylate, lauryl acrylate, and tetrahydrofurfuryl methacrylate.

Preferred mono-functional monomers for use according to the present invention are methyl methacrylate and tetrahydrofurfuryl methacrylate.

Examples of suitable di-functional monomers are : 1,6-hexanediol diacrylate, 1,6-hexanediol dimethacrylate, neopentylglycol diacrylate, 1,4-butanediol diacrylate, ethyleneglycol diacrylate, polyethyleneglycol diacrylate, pentaerythritol diacrylate, divinylbenzene.

Acrylate 1,6-hexanediol diacrylate being a very good solvent for the applied resins (i) and (ii) is used preferably.

Examples of suitable tri- or more-functional monomers are trimethylolpropane triacrylate, trimethylolpropane trimethacrylate, pentaerythritol triacrylate, dipentaerythritol hexaacrylate, an acrylate of ethylenediamine, aliphatic and aromatic urethane acrylates and the monomers according to general formula (I) described in non-published European patent application No. 91200468.6 filed March 5, 1991, wherein reference is made for the preparation of said monomers to published German patent applications Nos. 3,522,005, 3,703,080, 3,643,216, 3,703,130, 3,703,080, 3,917,320 and 3,743,728.

When the radiation-curing is carried out with ultraviolet radiation (UV), a photoinitiator is present in the coating composition for forming the protective layer to serve as photo-radical former initiating the addition polymerization of the liquid monomers on UV-irradiation.

Photoinitiators suitable for use in photo-radical production belong to the class of organic carbonyl compounds, for example, benzoin ether series compounds such as benzoin isopropyl, isobutylether; benzil ketal series compounds; ketoxime esters; benzophenone series compounds such as benzophenone, o-benzoylmethylbenzoate; acetophenone series compounds such as acetophenone, trichloroacetophenone, 1,1-dichloroacetophenone, 2,2-diethoxyacetophenone, 2,2-dimethoxy-2-phenylacetophenone; thioxanthone series compounds such as 2-chlorothioxanthone, 2-ethylthioxanthone; and compounds such as 2-hydroxy-2-methylpropiophenone. 2-hydroxy-4'-isopropyl-2-methylpropiophenone, 1-hydroxycyclohexylphenylketone; etc.

A particularly preferred photoinitiator is 2-hydroxy-2-methyl-1-phenyl-propan-1-one which product is marketed by E. Merck, Darmstadt, Germany under the tradename DAROCUR 1173.

The amount of the photoinitiator used is preferably within the range of 0.01 to 5 parts by weight relative to 100 parts by weight of the addition polymerizable monomer(s).

Apart from the above defined compounds the adhesive layer composition may contain additives playing a role in the coating stage or in the final layer. Examples of such additives are surfactants, solid lubricants, e.g. waxes, defoamers and anti-static agents.

### Apparatus and methods for curing

Apparatus for radiation curing are known to those skilled in the art and are commercially available. When applying a photoinitiator in the primer layer composition the curing can proceed advantageously with ultraviolet radiation. For example, the curing proceeds with medium pressure mercury arc lamps or pulsed xenon arcs. These ultraviolet sources usually are equipped with a cooling installation, an installation to remove the produced ozone and a nitrogen inflow to exclude air from the surface of the product to be cured during radiation processing. An intensity of 40 to 120 W/cm in the 200-400 nm region is usually employed. An example of a commercially available ultraviolet source is IST supplied by Strahlentechnik, Oberboihingen, W. Germany.

High energy ionizing radiation such as X-rays, gamma rays, beta rays and accelerated electrons can also be used to accomplish curing of the coating. Typically, the radiation used should be of a sufficient intensity to penetrate substantially all the way through the coated layer. The total dosage employed should be sufficient to bring about curing of the radiation curable coating composition to form a solid layer.

UV radiation is better suited for non-pigmented or slightly pigmented systems having relatively thin films to allow full penetration of the irradiation.

When the protective layer has to possess high UV transmittance it is advantageous to work without UV absorbing photoinitiator and to apply electron beam (EB) curing since therefor no photoinitiator is needed. The penetration power of electron beam radiation depends on the value of the electron accelerating voltage and on the absorption capacity of the coatings.

There are two types of electron beam accelerators: high energy scanner types and low energy linear-cathode types also called electrocurtain type accelerators. These accelerators are usually equipped with nitrogen inflow. A dose in the range of 0.01 to 10 megarads is employed. Examples of commercially available EB accelerators are PILOT 200 and CB175/60/380 both supplied by Energy Sciences Inc., Geneva, Switzerland. Electron beam curing is described e.g. in the periodical Adhäsion 1990 - Heft 12, pages 39-40. Curing periods of about 1 second duration are possible, especially in thin (10-20 micron) coatings.

Coating of the coating composition forming the protective layer proceeds advantageously by means of a coating technique known as silk screen printing.

When applying said coating technique the liquid coating composition of said adhesive layer preferably has at the coating temperature a viscosity of at least 450 mPa.s, the viscosity being measured at that temperature with a Hoeppler viscometer.

In the production of a heat-mode recording material having direct-read-after write capability bismuth has interesting properties. Vacuum-deposited bismuth yields a high optical density even in very thin (thickness smaller than 200 nm) layers. The optical density of such vapour-deposited bismuth layer can be reduced by flash light or laser beam exposure and bismuth adheres directly to an unsubbed polyethylene terephthalate support as has been mentioned already in GB-P 1,566,802.

The application of a thin bismuth film for DRAW recording is described in the periodical Optica Acta, 1977, vol. 24, No. 4, 427-431. The storage layer, i.e. the recording layer, described therein consists of a 60 nm bismuth layer and a Ge anti-reflex coating that prevents to a certain degree oxidation of the bismuth layer.

In order to obtain recording materials that are suited for the production of images that wholly or partly can be read-out in the reflection mode the recording layer, e.g. a black mat bismuth layer is applied on a reflective support or supported reflective interlayer, e.g. made of aluminium or containing a dispersion of white pigment, e.g. titanium dioxide in a polymeric binder, e.g. gelatin.

The present invention is illustrated by the following examples without however, limiting it thereto. All percentages and ratios are by weight unless otherwise mentioned.

### EXAMPLE 1

On one side of a 63 µm thick polyethylene terephthalate film serving as temporary support a co(styrene/butylmethacrylate)(70/30) solution in methyl ethyl ketone was coated to form after drying a 6 µm thick adhesive layer.

The thus obtained film material was laminated through its adhesive layer in contact with a freshly in vacuum deposited bismuth layer. Said bismuth layer was deposited at a thickness of 0.3 µm on a 175 µm thick permanent polyethylene terephthalate resin support using the apparatus schematically represented in Fig. 1

The lamination proceeded at a temperature of 89 °C and lamination speed of 40 cm/min. Thereupon the laminated material was wound up on a collector roller that was removed from the vacuum chamber after restoring normal pressure.

The temporary support of the laminated material was peeled apart under ambient temperature conditions (about 20 °C) out of the vacuum chamber as shown in Fig. 2 leaving said adhesive layer as outermost protective layer on said bismuth heat-mode recording layer.

The scratch resistance of said outermost protective layer was measured as described hereinbefore and corresponded with a scratch resistance value of 6 g.

The transmission optical density of the obtained heat-mode recording material measured through said outermost protective recording layer with Macbeth densitometer type 904TD (provided with UV filter) was 3.53.

The heat-mode recording material was exposed scanning-wise (38.8 m/s) to 1053 nm light of a commercial Nd:Ylf laser having a spot diameter 1/e² = 18 µm and maximal exposure power of 1.7 W striking the recording layer. The transmission density obtained in a thus exposed large solid area was 0.24.

An adherence test carried out by tape (TESA type 4122 of 3M Co.) first pressure-stuck to said protective layer and abruptly torn off proved that the laminated protective covering layer remained undisturbed on the laser-beam exposed area as well as on the non-exposed area.

### EXAMPLE 2

Example 1 was repeated with the difference that the temporary support was pre-coated with a release layer in the form of a 2 µm thich polyvinyl alcohol layer applied from an aqueous 5 % polyvinyl alcohol solution of which the polyvinyl alcohol still contained 2 % of unsaponified vinylacetate groups. The coating solution contained 0.05 % of saponine as wetting agent. The in Example 1 described adhesive layer was coated onto said release layer.

In the peel apart step the release layer was easily removed together with the temorary support.

The same scratch resistance and adherence results as mentioned in Example 1 were obtained.

### EXAMPLE 3

On one side of a 63 µm thick polyethylene terephthalate film serving as temporary support a solution in methyl ethyl ketone containing 8 % of co(vinylchloride/vinyl acetate/maleic acid) (86/13/1) commercially available under the tradename VINYLITE VMCH from UNION CARBIDE, 1.82 % of CYMEL 303 (tradename of CYANAMIDE for hexamethoxymethylmelamine, and 0.18 % of CYCAT 600, tradename for a hardening catalyst available from CYANAMIDE was coated to form after drying a 6 µm thick heat-curable adhesive layer.

The thus obtained film material was laminated through its adhesive layer in contact with a freshly in vacuum deposited bismuth layer as described in Example 1.

The temporary support of the laminated material was peeled apart under ambient temperature conditions (about 20 °C) out of the vacuum chamber as shown in Fig. 2 and cured at 110 °C for 30 minutes.

The scratch resistance of said outermost protective layer was measured as described hereinbefore and corresponded with a scratch resistance value of 8 g.

### EXAMPLE 4

On one side of a 63 µm thick polyethylene terephthalate film serving as temporary support a solution in methyl ethyl ketone containing 6.5 % of co(styrene/butylmethacrylate (73/30), 2.0 % of trimethylolpropane triacrylate (SARTOMER 351 tradename of CRAY VALLEY), 1.35 % 1, 1'-biimidazole-2, 2'-bis(o-chlorophenyl)-4, 4',5, 5'-tetraphenyl. 0.075 % mercaptobenzoxazole and 0.075 % Michler's ketone was coated to form after drying a 6 µm thick UV-curable adhesive layer.

The thus obtained film material was laminated through its adhesive layer in contact with a freshly in vacuum deposited bismuth layer as described in Example 1.

Thereupon outside the vacuum chamber UV-curing of the transferred UV-curable adhesive layer was carried out by means of a Labcure Unit (marketed by TECHNIGRAF GmbH, Grävenwiesbach, Germany) operating with air cooling, an energy supply of 80 W/cm at a throughput velocity of 2 m/min while maintaining the curable layer at a distance of 11 cm from the UV-radiation source.

Then the temporary support of the laminated material was peeled apart under ambient temperature conditions (about 20 °C) out of the vacuum chamber as shown in Fig. 2.

The scratch resistance of the UV-cured outermost protective layer was measured as described hereinbefore and corresponded with a scratch resistance value of 8 g.

### EXAMPLE 5

On one side of a 63 µm thick polyethylene terephthalate film serving as temporary support a solution in methyl ethyl ketone containing 6.5 % of co(styrene/butylmethacrylate (73/30), 2.0 % of trimethylolpropane triacrylate (SARTOMER 351 tradename of CRAY VALLEY) was coated to form after drying a 6 µm thick EB-curable adhesive layer.

The thus obtained film material was laminated through its adhesive layer in contact with a freshly in vacuum deposited bismuth layer as described in Example 1.

The temporary support of the laminated material was peeled apart under ambient temperature conditions (about 20 °C) out of the vacuum chamber as shown in Fig. 2.

Thereupon EB-curing of the transferred EB-curable adhesive layer was carried out by means of an electron beam producing apparatus operating at 150 kV and radiation energy corresponding with 4 mGy at a travelling speed of the irradiated material of about 3 m/min.

The scratch resistance of said outermost protective layer was measured as described hereinbefore and corresponded with a scratch resistance value of 8 g.

### EXAMPLE 6

On one side of a 63 µm thick polyethylene terephthalate film serving as temporary support was coated a solution in methyl ethyl ketone containing 6.5 % of costyrene/butylmethacrylate (73/30), 2.0 % of trimethylolpropane triacrylate (SARTOMER 351 tradename of CRAY VALLEY), 1.35 % 1, 1'-biimidazole-2, 2'-bis(o-chlorophenyl)-4, 4',5, 5'-tetraphenyl, 0.075 % mercaptobenzoxazole and 0.075 % Michler's ketone so as to form after drying a 6 µm thick UV-curable adhesive layer.

Onto said dried UV-curable layer an aqueous dispersion (latex) of co(butadiene/styrene/acrylic acid/acrylamide) (34/62/2.0/4.0), an elastomer marketed by BAYER AG Germany under the tradename BAYSTAL P VP KA8522, was coated so as to form a relatively soft adhesive layer having a dry coating coverage of 4 g/m².

The thus obtained film material was laminated through its lastmentioned adhesive layer in contact with a freshly in vacuum deposited bismuth layer as shown in Fig 1.

Thereupon outside the vacuum chamber UV-curing of the UV-curable layer was carried out by means of a Labcure Unit (marketed by TECHNIGRAF GmbH, Grävenwiesbach, Germany) operating with air cooling, an energy supply of 80 W/cm at a throughput velocity of 2 m/min while maintaining the UV-curable layer at a distance of 11 cm from the UV-radiation source.

Then the temporary support of the laminated material was peeled apart under ambient temperature conditions (about 20 °C) out of the vacuum chamber as shown in Fig. 2.

The scratch resistance of the thus cured outermost protective layer was measured as described hereinbefore and corresponded with a scratch resistance value of 8 g.

## Claims

1. A process for the production of a heat-mode recording material having "direct read after write" (DRAW) capability and containing a heat-mode recording layer on a permanent support, wherein said process comprises in consecutive order the steps of (1) forming a laminated web by laminating with heat and pressure to said recording layer a single adhesive layer or multiple layer assemblage carried by a web-type temporary support which layer or layer assemblage has a thickness not larger than 20 µm, and (2) separating said temporary support from said adhesive layer leaving said single adhesive layer as a protective element on said recording layer, or (2') separating said temporary support from said adhesive layer assemblage leaving said layer assemblage as a protective element on said recording layer, and
(3) chemically hardening said single adhesive layer or said outermost layer of said multiple layer assemblage after said separating step (2) or (2') by means of heat and/or by ultra-violet radiation or electron beam radiation, said hardening providing an outermost protective layer having at 20 °C a scratch resistance value not lower than 6 g determined by ANSI test PH1.37-1977 Method A using in the scratch test a single spherical point sapphire stylus having a point diameter of 13 µm (micron).

2. Process according to claim 1, wherein said recording layer is coated on its permanent support under vacuum conditions, and said step (1) is carried out under the same vacuum conditions as wherein the coating of said recording layer on its permanent support took place.

3. Process according to claim 1, with the modification that said single adhesive layer or said outermost layer of said multiple layer assemblage after transfer onto said heat-mode recording layer is hardened through cooling to ambient temperature (20 °C) before said separating (2), (2').

4. Process according to claim 1, wherein said multiple layer assemblage has a layer contacting the heat-mode recording layer made of a soft non-hardenable (non-curable) hot melt adhesive polymer having a glass transition temperature lower than 30 °C and at least the layer forming said outermost layer on the recording material is chemically hardenable by means of heat and/or by ultraviolet radiation or electron beam radiation.

5. Process according to claim 1, wherein the thickness of said single adhesive layer or the total thickness of said multiple layer assemblage is in the range of 1 to 10 µm.

6. Process according to claim 1, wherein said step (2) is carried out under vacuum conditions.

7. Process according to claim 1, wherein said steps (2), (2') are carried out under non-vacuum conditions and the laminated web obtained in step (1) is led in the nip of pressure rollers and the temporary support together with its optional release layer is peeled apart leaving the single adhesive layer or said multiple layer assemblage on top of said heat-mode recording layer.

8. Process according to claim 1, wherein said permanent support is made of a polymer selected from the group consisting of polyesters, polycarbonates, cellulose triacetate, poly(meth)acrylic esters, polyvinyl chloride and copolymers.

9. Process according to claim 1, wherein said permanent support has a thickness in the range of 50 to 200 µm and is optionally provided with one or more subbing layers improving the adherence of said recording layer.

10. Process according to claim 1, wherein said temporary support is made of the same material as the permanent support.

11. Process according to claim 1, wherein said temporary support before carrying out said step (1) has been coated with an intermediary release layer for said adhesive layer or multiple layer assemblage, and wherein in said steps (2), (2') said release layer together with said temporary support is separated from said adhesive layer or multiple layer assemblage, and wherein said release layer is made of substances selected from the group consisting of solid waxes, polyvinyl alcohol, silicone resins, higly fluorinated resins and silicone oil or contains said substances serving as release agent in excess of 30 % by weight in a film forming polymer adhering to the temporary support.

12. Process according to claim 1, wherein said single adhesive layer or outermost layer of said layer assemblage is made from a radiation-curable composition containing as primary components :
(1) at least one reactive (pre)polymer or oligomer,
(2) optionally at least one reactive solvent monomer dissolving (1),
(3) in the case of an UV curable formulation a photoinitiator.

13. Process according to claim 1, wherein the scratch resistance of the obtained protective element is improved by the presence therein of anti-friction agents in the form of waxes, fluorine-or phosphate-containing surfactants and inorganic slipping agents being silica or silicates having an average particle size of 1 to 10 µm partially protruding from the adhesive layer.

14. Process according to claim 1, wherein the heat-mode recording layer is a bismuth layer that has been coated onto said permanent support under vacuum conditions.

## Patentansprüche

1. Ein Verfahren zur Herstellung eines wärmeempfindlichen Aufzeichnungsmaterials mit DRAW-Fähigkeit (direktes Lesen nach dem Schreiben), das eine wärmeempfindliche Aufzeichnungsschicht auf einem permanenten Träger enthält, wobei das Verfahren der angegebenen Reihe nach die folgenden Stufen umfaßt : (1) die Bildung einer laminierten Bahn, indem unter Anwendung von Wärme und Druck eine durch einen bahnartigen zeitweiligen Träger unterstützte Einzelklebeschicht oder Mehrschichtenanordnung auf der Aufzeichnungsschicht laminiert wird, wobei die Schicht oder Schichtenanordnung eine Stärke von nicht mehr als 20 µm aufweist, und (2) das Abtrennen des zeitweiligen Trägers von der Klebeschicht, wodurch die Einzelklebeschicht als Schutzelement auf der Aufzeichnungsschicht zurückbleibt, oder (2') das Abtrennen des zeitweiligen Trägers von der Klebeschicht-Anordnung, wodurch die Schichtenanordnung als Schutzelement auf der Aufzeichnungsschicht zurückbleibt, und
(3) die nach der Abtrennstufe (2) oder (2') vorgenommene chemische Härtung der Einzelklebeschicht oder der Außenschicht der Mehrschichtenanordnung unter Anwendung von Wärme und/oder Ultraviolettstrahlen oder Elektronenstrahlen, wobei die gehärtete Außenschutzschicht bei 20°C eine gemäß dem ANSI-Test PH1.37-1977 Methode A bestimmte Kratzfestigkeit von nicht weniger als 6 g aufweist, wobei im Kratztest ein Einzelkugelpunkt-Saphirstift mit einem Punktdiameter von 13 µm benutzt wird.

2. Verfahren nach Anspruch 1, dadurch gekennzeichnet, daß die Aufzeichnungsschicht unter Vakuumbedingungen auf deren permanenten Träger aufgetragen und Stufe (1) unter denselben Vakuumbedingungen als beim Auftrag der Aufzeichnungsschicht auf deren permanenten Träger vorgenommen wird.

3. Verfahren nach Anspruch 1, mit der Änderung, daß die Einzelklebeschicht oder die Außenschicht der Mehrschichten-Anordnung nach deren Auftrag auf die wärmeempfindliche Aufzeichnungsschicht und vor der Trennstufe (2), (2') durch Abkühlung auf Zimmertemperatur (20°C) gehärtet wird.

4. Verfahren nach Anspruch 1, dadurch gekennzeichnet, daß die Mehrschichtenanordnung eine die wärmeempfindliche Aufzeichnungsschicht berührende Schicht aus einem weichen, unhärtbaren, heißschmelzenden Klebepolymeren mit einem Höchsteinfrierpunkt von 30°C enthält und wenigstens die Schicht, die später die Außenschicht auf dem Aufzeichnungsmaterial bilden wird, chemisch wärmehärtbar und/oder durch Ultraviolettstrahlung oder Elektronenstrahlung härtbar ist.

5. Verfahren nach Anspruch 1, dadurch gekennzeichnet, daß die Stärke der Einzelklebeschicht oder die Gesamtstärke der Mehrschichtenanordnung zwischen 1 und 10 µm liegt.

6. Verfahren nach Anspruch 1, dadurch gekennzeichnet, daß Stufe (2) unter Vakuumbedingungen stattfindet.

7. Verfahren nach Anspruch 1, dadurch gekennzeichnet, daß die Stufen (2), (2') unter Nicht-Vakuumbedingungen vorgenommen werden und die in Stufe (1) erhaltene laminierte Bahn in den Griffbereich von Druckwalzen geführt und der zeitweilige Träger zusammen mit dessen eventueller Trennschicht abgetrennt wird, wodurch die Einzelklebeschicht oder Mehrschichtenanordnung auf dem wärmeempfindlichen Aufzeichnungsmaterial zurückbleibt.

8. Verfahren nach Anspruch 1, dadurch gekennzeichnet, daß der zeitweilige Träger aus einem Polymeren der Gruppe von Polyestern, Polycarbonaten, Cellulosetriacetat, Poly(meth)acrylsäureestern, Polyvinylchlorid und Copolymeren derselben hergestellt ist.

9. Verfahren nach Anspruch 1, dadurch gekennzeichnet, daß der permanente Träger eine Stärke zwischen 50 und 200 µm aufweist und gegebenenfalls mit einer oder mehreren, die Haftung der Aufzeichnungsschicht verbessernden Haftschichten überzogen ist.

10. Verfahren nach Anspruch 1, dadurch gekennzeichnet, daß der zeitweilige Träger aus demselben Material wie der permanente Träger besteht.

11. Verfahren nach Anspruch 1, dadurch gekennzeichnet, daß der zeitweilige Träger vor Stufe (1) mit einer ZwischenTrennschicht für die Klebeschicht oder Mehrschichtenanordnung überzogen und die Trennschicht in den Stufen (2), (2') zusammen mit dem zeitweiligen Träger von der Klebeschicht oder Mehrschichtenanordnung getrennt wird, und die Trennschicht aus Substanzen wie festen Wachsen, Polyvinylalkohol, Silikonharzen, hochfluorierten Harzen und Silikonöl hergestellt ist oder diese als Trennmittel dienenden Substanzen vorzugsweise in einem Überschuß von 30 Gew.-% in einem filmbildenden, am zeitweiligen Träger haftenden Polymeren enthält.

12. Verfahren nach Anspruch 1, dadurch gekennzeichnet, daß die Einzelklebeschicht oder die Außenschicht der Schichtenanordnung aus einer strahlungshärtbaren Zusammensetzung mit den nachstehenden Hauptbestandteilen besteht :
(1) wenigstens einem reaktionsfähigen (Pre)polymeren oder Oligomeren,
(2) gegebenenfalls wenigstens einem reaktionsfähigen, (1) auflösenden Lösungsmittelmonomeren,
(3) im Falle einer UV-härtbaren Zusammensetzung einem Fotoinitiator.

13. Verfahren nach Anspruch 1, dadurch gekennzeichnet, daß die Kratzfestigkeit des erhaltenen Schutzelements durch Einarbeitung in dieses Schutzelement von Antireibungsmitteln in Form von Wachsen, fluor- oder phosphathaltigen Tensiden und anorganischen Gleitmitteln, d.h. teilweise aus der Klebeschicht herausragenden Kieselerdeteilchen oder Silikatteilchen mit einer durchschnittlichen Korngröße zwischen 1 und 10 µm, verbessert wird.

14. Verfahren nach Anspruch 1, dadurch gekennzeichnet, daß die wärmeempfindliche Aufzeichnungsschicht eine unter Vakuumbedingungen auf den permanenten Träger vergossene Wismutschicht ist.

## Revendications

1. Procédé pour la préparation d'un matériau d'enregistrement thermosensible possédant une capacité de "lecture directe après écriture" (DRAW) et contenant une couche d'enregistrement thermosensible sur un support permanent, dans lequel ledit procédé comprend, dans un ordre successif les étapes consistant à: (1) former une bande stratifiée en contrecollant à l'aide de chaleur et de pression, à ladite couche d'enregistrement, une couche adhésive unique ou un assemblage multicouche porté par un support temporaire du type d'une bande, ladite couche ou ledit assemblage de couches possédant une épaisseur qui n'est pas supérieure à 20 µm, et (2) séparer ledit support temporaire de ladite couche adhésive en laissant subsister ladite couche adhésive unique sous forme d'un élément protecteur sur ladite couche d'enregistrement, ou (2') séparer ledit support temporaire dudit assemblage de couches adhésives en laissant subsister ledit assemblage de couches sous forme d'un élément protecteur sur ladite couche d'enregistrement, et (3) soumettre à un durcissement chimique ladite couche adhésive unique ou ladite couche située le plus à l'extérieur dudit assemblage multicouche après ladite étape de séparation (2) ou (2') en utilisant de la chaleur et/ou un rayonnement ultraviolet ou un rayonnement à faisceau électronique, ledit durcissement procurant une couche protectrice située le plus à l'extérieur, possédant à 20°C une valeur de résistance aux rayures qui n'est pas inférieure à 6 grammes, comme déterminé par la norme ANSI, essai PH1.37-1977, procédé A, en utilisant, dans l'essai de résistance aux rayures, un burin de gravure unique à pointe sphérique possédant un diamètre de pointe de 13 µm (microns).

2. Procédé selon la revendication 1, dans lequel on coule ladite couche d'enregistrement sur son support permanent dans des conditions de vide et on effectue ladite étape (1) dans les mêmes conditions de vide que celles qui prévalent lorsqu'on coule ladite couche d'enregistrement sur son support permanent.

3. Procédé selon la revendication 1, avec cette modification que l'on soumet ladite couche adhésive unique ou ladite couche située le plus à l'extérieur dudit assemblage multicouche après transfert sur ladite couche d'enregistrement thermosensible à un durcissement par refroidissement à la température ambiante (20°C) avant ladite séparation (2), (2').

4. Procédé selon la revendication 1, dans lequel ledit assemblage multicouche possède une couche venant se mettre en contact avec la couche d'enregistrement thermosensible, réalisée à partir d'un polymère tendre thermofusible auto-adhésif non durcissable possédant une température de transition vitreuse inférieure à 30°C, et au moins la couche formant ladite couche située le plus à l'extérieur sur le matériau d'enregistrement est apte à être durcie par voie chimique en utilisant de la chaleur et/ou un rayonnement ultraviolet ou un rayonnement à faisceau électronique.

5. Procédé selon la revendication 1, dans lequel l'épaisseur de ladite couche adhésive unique ou l'épaisseur totale dudit assemblage multicouche se situe dans le domaine de 1 à 10 µm.

6. Procédé selon la revendication 1, dans lequel on effectue ladite étape (2) dans des conditions de vide.

7. Procédé selon la revendication 1, dans lequel on effectue lesdites étapes (2), (2') dans des conditions exemptes de vide et on guide la bande stratifiée obtenue à l'étape (1) dans l'écartement de cylindres de pression et on pellicule le support temporaire conjointement avec sa couche de séparation facultative pour laisser subsister la couche adhésive unique ou ledit assemblage multicouche par-dessus ladite couche d'enregistrement thermosensible.

8. Procédé selon la revendication 1, dans lequel ledit support permanent est réalisé à partir d'un polymère choisi parmi le groupe constitué par des polyesters, des polycarbonates, le triacétate de cellulose, des esters poly(méth)acryliques, le chlorure de polyvinyle et des copolymères.

9. Procédé selon la revendication 1, dans lequel ledit support permanent possède une épaisseur qui se situe dans le domaine de 50 à 200 µm et est muni, le cas échéant, d'une ou de plusieurs couches adhésives améliorant l'adhérence de ladite couche d'enregistrement.

10. Procédé selon la revendication 1, dans lequel ledit support temporaire est réalisé à partir de la même matière que celle du support permanent.

11. Procédé selon la revendication 1, dans lequel ledit support temporaire, avant la mise en oeuvre de ladite étape (1), a été enduit d'une couche intermédiaire de séparation pour ladite couche adhésive ou pour ledit assemblage multicouche, et dans lequel, dans lesdites étapes (2), (2'), on sépare de ladite couche adhésive ou dudit assemblage multicouche, ladite couche de séparation conjointement avec ledit support temporaire, et dans lequel on prépare ladite couche de séparation à partir de substances choisies parmi le groupe constitué par des cires solides, l'alcool polyvinylique, des résines de silicone, des résines fortement fluorées et de l'huile de silicone ou bien contenant lesdites substances faisant office d'agent de séparation en un excès de 100% en poids dans un polymère filmogène adhérant au support temporaire.

12. Procédé selon la revendication 1, dans lequel ladite couche adhésive unique ou ladite couche située le plus à l'extérieur dudit assemblage de couches est réalisée à partir d'une composition durcissable par rayonnement contenant, comme composants principaux: (1) au moins un (pré)polymère ou oligomère réactif, (2) le cas échéant, au moins un monomère de solvant réactif dissolvant (1), (3) dans le cas d'une formulation durcissable aux UV, un photoinitiateur.

13. Procédé selon la revendication 1, dans lequel on améliore la résistance aux rayures manifestée par l'élément protecteur obtenu en y incorporant des agents antifriction sous forme de cires, d'agents tensioactifs contenant du fluor ou du phosphate et d'agents de glissement inorganiques, à savoir la silice ou des silicates possédant une granulométrie moyenne de 1 à 10 µm, faisant partiellement saillie par rapport à la couche adhésive.

14. Procédé selon la revendication 1, dans lequel la couche d'enregistrement thermosensible est une couche de bismuth qui a été coulée sur ledit support permanent dans des conditions de vide.
